# EUROPEAN PATENT APPLICATION

(11) **EP 2 292 877 A1**
(43) Date of publication of application: **09.03.2011**
(21) Application number: 09169207.9
(22) Date of filing: 02.09.2009
(51) Int. Cl.: E04H 6/02, F24J 2/04, H01L 31/042, F24J 2/54

(54) **Photovoltaic solar energy generation and vehicle cover installation**

(71) Applicant: Dhamma Asset Management, 28001 Madrid (ES)
(72) Inventor: Esposito, Philippe, 28001, MADRID (ES); Crambade, Olivier, 28001, MADRID (ES)
(74) Representative: PROPI, S.L.

(57) **Abstract**

It comprises a central pillar (4), preferably cylindrical, anchored to the ground by means of an anchor plate (2) and the bolts (1) which are inserted into the foundation (3), where the head array formed by the photovoltaic panels (7) arranged on the lattice work (5) and the straps (6) is placed on this pillar (4), adapted to the dimensions of the photovoltaic panels (7), so that the array of the head of lattice work (5), straps (6) and photovoltaic panels (7) pivots on the upper part of the central pillar (4), enabling the variation of inclination of the array in search of the direction of the sun. The installation also has at least one plug (11) for charging and supplying electric cars, and can also have other elements such as a security camera (12), floodlights and other electronic devices.

## Description

### DESCRIPTION

Photovoltaic solar energy generation and vehicle cover installation.

### OBJECT OF THE INVENTION

The present invention consists of a photovoltaic solar energy generation and vehicle cover installation, which supplies electrical energy while at the same time providing cover for vehicles and protecting them from the inclemencies of the weather. It can also charge the batteries of electric vehicles, light up precincts during the night, report on the location of each vehicle, watch over them, etc.

The installation comprises a central pillar of variable height which has an upper part which is capable of rotating, whereon photovoltaic panels on lattice work and straps are arranged, and the array pivots seeking the most suitable position for the optimal capture of solar energy.

### BACKGROUND OF THE INVENTION

A large number of solar collectors are known in the state of the art, which are arranged on a fixed or mobile structure, with the possibility of being adjustable so that the solar rays come into contact with them and a maximum use can be obtained. In these most recent structures, they are arranged on a pole.

As is known, the purpose of solar trackers is to support solar plates, enabling the tracking of the Sun so that said plates are always perpendicular to the solar rays, thereby increasing the energetic efficiency of the plates with respect to the fixed systems. With this kind of structure, energy from the sun is obtained, stored and converted for its subsequent use in electrical energy, this being its sole purpose.

The aim of the present invention is twofold: on the one hand, to capture solar energy in order to transform it into electrical energy, and on the other hand, to use said structure as protection and parking space for vehicles, in addition to other uses which will be mentioned later. In this sense the document ES 1626140 is known, which relates to a structure that serves as parking space for vehicles, with a cover for the vehicles and means of support for said cover, with transversal beams supporting the solar panels which form the cover for the vehicles, all of this supported on arms arranged on an inclined plane with respect to the horizontal plane, the arms being articulated so as to change the angle of inclination.

### DESCRIPTION OF THE INVENTION

The proposed invention consists of a photovoltaic solar energy generation installation, specially intended to cover vehicles in parking areas and such like, with novel technical advantages and characteristics with respect to the state of the art.

The invention falls within the scope of photovoltaic installations and comprises a structure which supports a means of producing renewable energy. Furthermore, it has connecting points for electric vehicles so that they can be recharged while parked, incorporates a system that can report on the location of each vehicle, includes a system to light up the vehicles and another system to watch over them, and incorporates marketing elements which enable the placement of advertisements or information about events taking place at that time, or other uses.

In addition to all these applications, thanks to the production of energy it is capable of protecting the vehicles from the inclemencies of the weather, such as rain, hail, etc., while at the same time providing shade for them. In this way, the photovoltaic solar energy generation installation proposed is specially designed for its application in large car parks, such as shopping centres, transportation systems, airports, logistical vehicle parking solutions or administrative buildings for athletic or social events.

The installation is supported on a cylindrical pillar, anchored on a foundation by means of anchor plates and bolts. The pillar is protected against possible blows which the vehicles may receive during parking manoeuvres. As it only has a central pillar, it leaves under the cover a large amount of free space which is used for parking. The foundation is calculated on the basis of the parameters of each plot of land, both for strength and type of material and phreatic surface. The foundation has interior ducts that connect the ducts of the car park network with the ducts of the shelter. These ducts in turn run through the cylindrical pillar, being ducts which, on the one hand, generate electricity coming from the solar panels, and on the other, supply electricity to the floodlights, plugs and the rest of the systems that can be incorporated.

In the upper part of the pillar a rotation takes place to make the panels face the sun, this inclination adapting in each case to the parking space where the panels will be placed. The lattice work that transmits the forces bearing down on the panels to the ground is placed on the head of the pillar; these forces being produced by the wind, its own weight, snow, etc.. In this way, the inclination of the plane of the panels can be varied, rotating it so that it faces the desired direction.

The height of the installation can also be varied, enabling the parking of vehicles of different heights.

Straps fitting the dimensions of the panels are fastened on the lattice work. Thus, the panels are fastened to the straps, joining the frame which frames the panel with the steel strap whereon it is placed.

The photovoltaic panels produce energy in direct current; the wiring carries this direct current from the panels to the inverters, which transform the direct current into alternative current. Then, this alternative current is evacuated to the power grid according to the requirements of each electrical company.

The array of the structure is manufactured from galvanized steel to guarantee its durability, in addition to the fact that practically all of the materials used are recyclable, so they help towards sustainable construction.

In an embodiment of the invention, the installation can be manufactured by attaching panels to each other, thereby achieving two or three pillar installations. This is specially applicable when the structure is facing the sun.

The proposed invention makes it possible to achieve installation that generates electricity through renewable energy, by means of photovoltaic cells integrated in solar panels. The electricity generated can be incorporated into the energy of the power grid of the company to be used by all of the users or can be used to supply electrical elements placed inside the precincts wherein the installation is located. And at the same time, a structure is achieved which provides shade and protects vehicles from the sun and from the inclemencies of the weather.

Another important advantage of the invention proposed is in the design thereof, as it is intended to enable its quick and easy disassembly and relocation without breaking up any pavement in the installation which is disassembled.

The flexibility of the design of the invention enables the invention to be set up by tailoring it to the car park wherein it is installed, adjusting the invention to the dimensions of the spaces, facing southwards and to the conditions of the plot of land, enabling the fixing of more panels and producing structures with several pillars.

As has already been commented, it furthermore enables the supply of energy through a plug for the charging of the batteries of the electric vehicles, and during the night-time hours, enables the illumination of the vehicles, facilitating their identification and access. It can also be a place for hanging advertisements or informing about the energy that is being generated through marketing elements. It can also inform about the availability of free parking spaces by means of numeration or the incorporation of an electronic parking assistance system.

The structure can also provide security cameras for the control and surveillance of the vehicles against robbery, damages, or such like.

### DESCRIPTION OF THE DRAWINGS

In order to complete the present description and with the purpose of helping towards a better understanding of the characteristics of the invention, in accordance with a preferred example of embodiment thereof, a set of drawings is attached as an integral part of said description, wherein the following, in an illustrative and non-limitative character, has been represented:

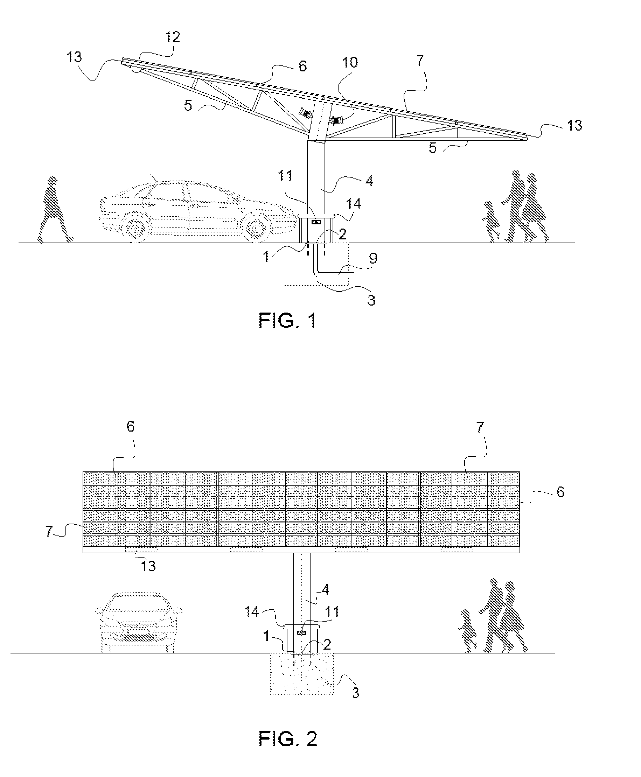

Figure 1 shows a side view of the installation of the invention, wherein the central pillar is observed slightly inclined in its upper part;
Figure 2 shows a right side view of the installation of the invention represented in Figure 1, so that the upper part with the photovoltaic panels is observed;

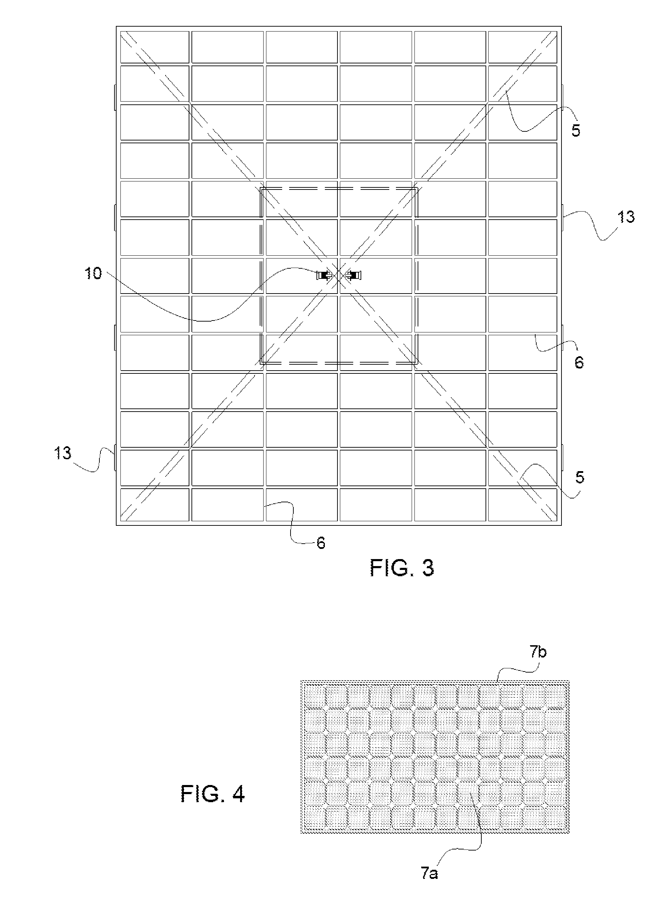

Figure 3 shows a plan view of the head of the installation, where the lattice work (5) and straps (6) are shown, whereon the panels are arranged. The luminaires (10) and the spaces (13) for placing the information for the assistance of the car park can also be observed;
Figure 4 shows a view of one of the solar panels which are arranged on the lattice work and straps;
Figure 5 shows a view of the installation of the invention when it is facing south, so that several heads can be joined together to form a installation with several pillars;
Figure 6 shows a view of the installation of the invention, wherein the possibility of raising or lowering the height thereof is observed.

### PREFERRED EMBODIMENT OF THE INVENTION

The present invention consists of a photovoltaic solar energy generation installation and vehicle cover, which at the same time provides shade for the vehicles and protects them from the inclemencies of the weather, supplies energy to electric vehicles, illuminates them at night, informs about the location of each one of them, incorporates advertising elements or offers any other type of information, in addition to enabling the continuous maintenance and control of the vehicles at all times.

The proposed system comprises a central pillar (4), preferably cylindrical, anchored to the ground by means of an anchor plate (2) and the bolts (1) which are inserted into the foundation (3). The head array is placed on this pillar, formed by the photovoltaic panels (7) arranged on the lattice work (5) and the straps (6), adapted to the dimensions of the photovoltaic panels (7), and so that this head array of lattice work (5), straps (6) and photovoltaic panels (7) pivots on the upper part of the central pillar (4), enabling the variation of inclination of the array in search of the direction of the sun.

In this manner, we obtain an installation which generates energy from a renewable energy source, at the same time enabling the protected parking of vehicles, amongst others. The photovoltaic panels (7) generate electrical energy in direct current; the wiring carries this direct current from the panels to the inverters, which transform the direct current into alternative current. Then, this current is evacuated to the power grid according to the requirements of the electrical company.

The photovoltaic panels (7) are formed by a glass core which contains the cells which convert solar energy into electrical energy. These panels (7) are fastened to the straps (6), joining the aluminium frame (7b) which frames the glass panel (7a) with the strap (6) whereon it is placed.

The central pillar (4) whereon the head array formed by photovoltaic panels (7), lattice work (5) and straps (6) is supported can vary in height. This enables the parking of vehicles underneath the array of the structure of different heights. Furthermore, said central pillar (4) has a protection (14) to prevent possible blows to the vehicles during parking manoeuvres.

An important part of the invention resides in the possibility of charging and supplying the batteries of electric vehicles parked under the structure, through at least one plug (11), preferably arranged in the central pillar (4). The proposed structure also facilitates the access and identification of the parked vehicles, through at least one luminaire (10).

The array of the head has at least one space (13) intended for the signage of the spots by means of numeration thereof or for the incorporation of luminous electronic elements, enabling the identification and management of each one of the parking spaces, as well as their possible numeration or other things. Furthermore, advertisements or any other desired information or information of interest could be incorporated.

The array of the photovoltaic solar energy generation installation and vehicle cover can also have security cameras (12), enabling the control and surveillance of the vehicles against theft and other damages.

In this manner, all of the electricity generation ducts of the panels (7) and the ducts (9) for the electrical supply of the luminaires (10), the plugs (11) for the electric cars or any other lighting device which can be placed there, such as security cameras (12), run through the interior of the cylindrical pillar (4), the interior ducts (9) connecting with the duct network of the car park.

The entire structure is manufactured from galvanized steel in order to guarantee its durability and practically all of the materials used are recyclable, helping towards a sustainable construction.

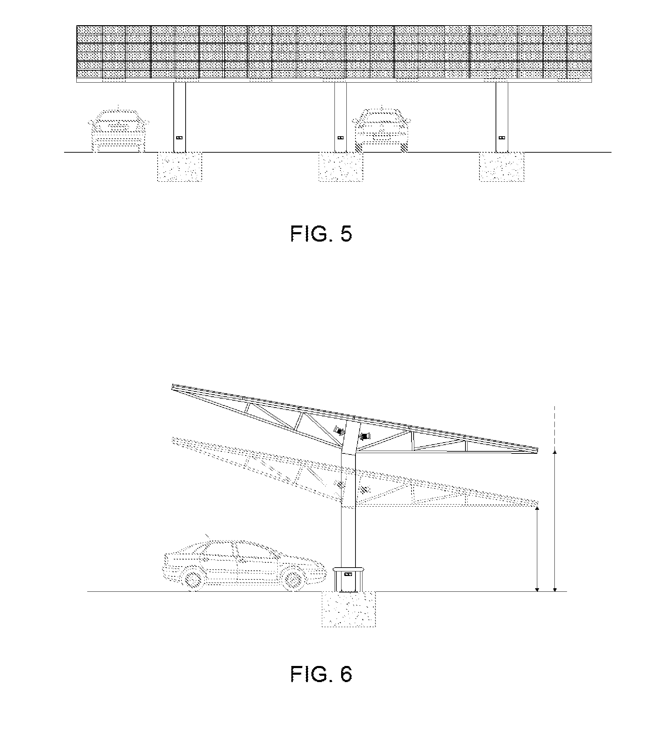

When the parking spaces are facing the south, the installations can fix to each other, so that structures with a plurality of pillars (4) are achieved, as observed in figure 5.

## Claims

1. Photovoltaic solar energy generation installation and vehicle cover, **characterized in that** it comprises a central pillar (4), preferably cylindrical, anchored to the ground by means of an anchor plate (2) and the bolts (1) are inserted into the foundation (3), where the head array formed by the photovoltaic panels (7) arranged on the lattice work (5) and the straps (6) is placed on this pillar (4), adapted to the dimensions of the photovoltaic panels (7), and so that the array of the head of lattice work (5), straps (6) and photovoltaic panels (7) pivots on the upper part of the central pillar (4), enabling the variation of inclination of the array in search of the direction of the sun.

2. Photovoltaic solar energy generation installation and vehicle cover, according to claim 1, **characterized in that** it has at least one plug (11) for charging and supplying electric cars.

3. Photovoltaic solar energy generation installation and vehicle cover, according to claim 1, **characterized in that** it has at least one luminaire (10), which facilitates the access and identification of the parked vehicles.

4. Photovoltaic solar energy generation installation and vehicle cover, according to claim 1, **characterized in that** the cylindrical pillar (4) has a protection (14) to prevent possible blows to the vehicles during parking manoeuvres.

5. Photovoltaic solar energy generation installation and vehicle cover, according to claim 1, **characterized in that** the head array has at least one space (13) intended for the incorporation of signage or for the placement of luminous electronic elements, so that it enables the identification of each one of the parking spaces.

6. Photovoltaic solar energy generation installation and vehicle cover, according to claim 1, **characterized in that** it has at least one security camera (12) which enables the control and surveillance of the vehicles against thefts and other damages.

7. Photovoltaic solar energy generation installation and vehicle cover, according to previous claims, **characterized in that** all of the electricity generation ducts coming from the panels (7) and the ducts (9) for electrical supply of the luminaires (10), the plugs (11) for electric cars or any other lighting device which can be placed there run through the interior of the cylindrical pillar (4), the interior ducts (9) connecting with the duct network of the car park.

8. Photovoltaic solar energy generation installation and vehicle cover, according to claim 1, **characterized in that in that** the central pillar (4) is of variable height, so that it enables the adaptation of the height of the installation according to the different vehicles to be parked.

9. Photovoltaic solar energy generation installation and vehicle cover, according to claim 1, **characterized in that** the photovoltaic panels (7), formed by a glass core which contains the cells which convert solar energy into electrical energy, are fastened to the straps (6), joining the aluminium frame (7b) which frames the glass panel (7a) to the strap (6) whereon it is placed.

10. Photovoltaic solar energy generation installation and vehicle cover, according to claim 1, **characterized in that** the panels fix to each other, producing a installation with a plurality of pillars (4), enabling the installation to be installed tailored to the car park wherein it is going to be installed, adjusting the installation to the dimensions of the places, facing the sun and to the conditions of the plot of land.
